# DEMANDE DE BREVET EUROPEEN

(11) **EP 1 595 846 A2**
(43) Date de publication de la demande: **16.11.2005**
(21) Numéro de dépôt: 05290883.7
(22) Date de dépôt: 26.04.2005
(51) Int. Cl.: C01B 39/06, C01B 37/00, C01B 33/38

(54) **Méthode de synthèse de métalloaluminosilicate cristallisé par synthèse directe**

(30) Priorité: 10.05.2004 FR 0405021
(71) Demandeur: Institut Français du Pétrole, 92852 Rueil Malmaison Cédex (FR)
(72) Inventeur: Barea, Eva, 46520 Puerto Sagunto Valencia (ES); Fornes, Vicente, 46001 Valencia (ES); Corma, Avelino, 46022 Valence (ES); Bourges, Patrick, 69003 Lyon (FR); Bats, Nicolas, 69590 Pomeys (FR); Guillon, Emmanuelle, 69390 Vernaison (FR)

(57) **Abrégé**

L'invention concerne une méthode de préparation par synthèse directe de métalloaluminosilicate cristallisé utilisant au moins une source d'aluminium et, comme source de silicium et comme source d'au moins un autre métal M, au moins un matériau silicique lamellaire contenant des métaux dans la charpente. Un autre objet de l'invention porte sur les nouveaux solides obtenus, notamment des solides de structure zéolithique donnée contenant des métaux particuliers dans la charpente zéolithique.

## Description

### Domaine de l'invention

L'invention concerne une méthode de préparation par synthèse directe de métalloaluminosilicate cristallisé utilisant au moins une source d'aluminium et, comme source de silicium et comme source d'au moins un autre métal M, au moins un matériau silicique lamellaire contenant des métaux dans la charpente. Un autre objet de l'invention porte sur les nouveaux solides obtenus, notamment des solides de structure zéolithique donnée contenant des métaux particuliers dans la charpente zéolithique.

### Art antérieur

Les zéolithes sont des solides cristallins dont la structure particulière présente une porosité très fine et très régulière. Ces solides sont connus depuis très longtemps (milieu du 18^{ème} siècle). Jusqu'à 1950 environ, les nombreuses zéolithes naturelles connues sont surtout considérées comme des curiosités minéralogiques. A partir de cette date, les premiers succès sont enregistrés dans le domaine de la synthèse. C'est alors le point de départ d'un véritable engouement pour ces minéraux et les nombreux travaux de recherche vont aboutir à d'importants succès en synthèse de zéolithes nouvelles.
On connaît à l'heure actuelle une quarantaine de zéolithes naturelles et entre 150 et 200 zéolithes synthétiques, dont moins d'une dizaine connaissent pour l'instant une application industrielle.
L'ensemble des types structuraux de toutes ces zéolithes est répertorié dans "Atlas of zeolite framework types", 5^{th} revised Edition, (2001), Ch.Baerlocher, W.M.Meier, D.H.Olson.
Le terme zéolithe se réfère selon l'atlas à un réseau d'atomes à coordinence tétraédrique MO₄. Les tétraèdres MO₄ sont reliés entre eux par leur sommet oxygène de telle sorte que deux d'entre eux ne partagent qu'un seul oxygène et que tous les atomes d'oxygène de la charpente appartiennent à deux tétraèdres. Dans les zéolithes, il en résulte une structure très aérée parcourue par des canaux très fins et très réguliers dont l'ouverture est comprise entre 0,3 et 1,0 nm.

Les zéolithes les plus connues sont celles qui cristallisent dans le réseau (Si,Al) (aluminosilicate), les zéolithes purement siliciques, les zéolithes qui cristallisent dans le réseau (Si,Ge) (silicogermanate), les zéolithes qui cristallisent dans le réseau (Si, B) (borosilicate).
Il est toutefois possible dans certains cas, pour des métaux particuliers, d'obtenir d'autres zéolithes métallosilicates par un mode de synthèse directe; on peut citer les titanosilicates comme Ti-Beta (Blasco, T.et al, Chem. Commun., 2367-2368 (1996)), la Zn-Beta (Takewaki et al, Topics in Catalysis, 9, 35-42 (1999), la Chabazite AI-Co-P (Feng P.Y, Nature 388 735-741(1997)), la Beta Ga-Si (Reddy K.SN et al J.Incl.Phenom.Mol.Recogn.Chem). Toutefois, les méthodes de préparation utilisées ne permettent pas l'incorporation de tous les métaux directement à la synthèse. Par exemple, les métaux tels que le Cobalt peuvent précipiter au pH de synthèse des zéolithes.
L'introduction de métal peut également être obtenue par substitution isomorphique post synthèse (EP 0,146,384). L'introduction n'est pas toujours possible et dépend de la nature des métaux. Les aluminophosphates sont des solides qui ont été largement étudiés et qui permettent l'incorporation de différents métaux tels que Co, Fe, Mg, Mn Zn (obtention par exemple de Co-AlPO -FAU).

En général, la synthèse hydrothermale des zéolithes met en jeu un mélange de composés contenant les métaux de la zéolithe (Si, Ge, Al....), des cations de métaux alcalins, de l'eau et souvent des molécules organiques qui jouent le rôle de structurant.
Pour les zéolithes silicoaluminiques, les sources de silicium et d'aluminium ont été largement étudiées dans la littérature. Par exemple, la source de silicium incorporée dans l'étape de préparation du mélange peut être du silicate, du silica gel, de la silice colloïdale et/ou de l'acide silicique.

Dans les brevets US4676958 et US4689207, Zones et al utilisent la magadiite, solide lamellaire purement silicique, comme source de silice pour la synthèse de zéolithes. Ces auteurs démontrent la synthèse de zéolithes telles que ZSM-5, ZSM-48, ZSM-12, ZSM-39 et SSZ-15 . De même, dans le brevet GB2125390, les auteurs utilisent comme source de silicium la magadiite silicique de synthèse ou la magadiite naturelle pour la synthèse de zéolithes ZSM-5 et MOR. Zones et al démontrent que la magadiite de synthèse est particulièrement intéressante en terme de coût pour la synthèse de zéolithes.

Ko Y et al ( Korean Journal of Chemical Engineering (2001) 18(3) 392-395) ont montré l'utilisation de magadiite échangée au Co²⁺ comme source de silicium et de cobalt pour la synthèse de Co-Silicalite. De même, Younghee Ko et al (Microporous and Mesoporous Materials 30(2-3) (1999)213-218) utilisent de la magadiite échangée au Mn²⁺ comme source de silicium et de manganèse pour la synthèse de Mn-silicalite. Dans ce cas, le métal échangé ne se situe pas dans la charpente du solide lamellaire et il est susceptible de s'échanger avec le structurant organique durant la synthèse de la zéolithe.

D'autres travaux portent sur la recristallisation de solides type Magadiite (Si, Al) pour la synthèse de zéolithes MFI, FER et MEL-(Microporous Mesoporous Materials 11 (1-2) (1997) 45-51; 22(1998) 45-51). Dans ce cas, le solide lamellaire utilisé à la fois comme source de silicium et d'aluminium est mis directement en contact d'un structurant en phase liquide ou phase gaz. Dans ces travaux, la source d'aluminium est limitée à l'aluminium incorporé dans le solide lamellaire ce qui limite l'introduction d'aluminium dans le solide final.

Dans ses travaux de recherche, la demanderesse a orienté ses efforts pour résoudre le problème de l'introduction de tout métal de manière simple et peu coûteuse dans la charpente de la zéolithe, pour toute gamme de rapports Si/Al et Si/métaux.

L'objet de cette invention porte sur une méthode de synthèse directe utilisant une source d'aluminium et un solide lamellaire métallosilicique comme source de silicium et comme source d'au moins un autre métal M pour la synthèse de métalloaluminosilicate cristallisé. Cette méthode permet l'incorporation de tout métal dans la charpente zéolithique avec des temps de cristallisation courts et des ratios Si/AI et Si/métal variable.

L'invention porte par ailleurs sur les nouveaux solides préparés notamment par cette méthode.
L'invention porte également sur des nouveaux solides zéolithiques comportant des métaux particuliers dans la charpente.

### Description de l'invention

L'invention concerne une méthode de préparation par synthèse directe de métalloaluminosilicate cristallisé utilisant au moins une source d'aluminium et, comme source de silicium et comme source d'au moins un autre métal M, au moins un matériau silicique lamellaire contenant des métaux dans la charpente.

Cette méthode comprend la préparation d'un mélange contenant au moins un solide lamellaire comme source de silicium et comme source d'au moins un autre métal M, au moins une source d'aluminium, de l'eau, éventuellement au moins un composé organique en tant que structurant organique, éventuellement au moins un germe de zéolithe et éventuellement au moins une source de cation alcalin. Ensuite, les étapes de cristallisation, nucléation et croissance des cristaux mènent au solide final cristallisé.

Le métal M est choisi de préférence dans le groupe formé par le bore, le chrome, le gallium, l'indium, le nickel, le zirconium, le cobalt, le titane, le cuivre, le niobium, le magnésium, le zinc, le manganèse, le germanium. De manière très préférée, le métal M est choisi parmi le bore, le gallium, l'indium, le nickel, le cobalt, le cuivre, le niobium, le magnésium, le zinc, le manganèse, le germanium.

L'invention porte par ailleurs sur les nouveaux solides préparés notamment par cette méthode.
L'invention porte également sur des nouveaux solides zéolithiques comportant des métaux particuliers dans la charpente.

### Technique de caractérisation

La diffraction X est une technique utilisée pour caractériser les solides selon l'invention. Dans l'exposé qui suit, l'analyse des rayons X est réalisée sur poudre avec un diffractomètre opérant en réflexion et équipé d'un monochromateur arrière en utilisant la radiation du cuivre (longueur d'onde de 1.5406 Å). On appelle d la distance inter-réticulaire qui est déduite de la position angulaire en utilisant la relation de Bragg (2 d ₍ₕₖₗ₎ * sin (θ) = n * λ). A partir de la position des pics de diffraction représentée par l'angle 2θ, on calcule par la relation de Bragg, les distances réticulaires dₕₖₗ caractéristiques de l'échantillon. L'estimation de l'erreur de mesure Δ(dₕₖₗ) sur dₕₖₗ se calcule par la relation de Bragg en fonction de l'erreur absolue Δ(2θ) affectée à la mesure de 2θ. Une erreur absolue Δ(2θ) égale à +-0.2° est communément admise. Chaque solide cristallisé possède un diagramme de diffraction des rayons X qui lui est propre.

### Description détaillée de l'invention

### Les solides silicates lamellaires

Parmi les silicates lamellaires utilisés pour l'invention, on peut citer la Magadiite, natrosilite, Kenyaite, makatite, nekoite, kanemite, okenite, dehayelite, macdonalite et rhodesite, octosilicate. De manière préférée, on utilisera la Magadiite et la Kenyaite. De manière plus préférée on utilisera la Magadiite.

Ces solides silicates lamellaires existent souvent à l'état naturel avec une composition du type AₓSi_{y}O_{z}, nH₂O, A pouvant être, par exemple, un élément sodium ou potassium. De tels solides lamellaires sont, par exemple, Na₂Si₁₄O₂₉·9H₂O pour la Magadiite et Na₂Si₂₀O₄₁·10H₂O pour la Kenyaite. De tels solides naturels présentent la même composition que les solides synthétiques. Ces solides présentent souvent une structure tridimensionelle, avec des interactions de type Van der Walls entre les feuillets ainsi qu'une faible surface spécifique.

Les solides siliciques lamellaires de l'invention peuvent être synthétisés selon toute méthode connue de l'homme de l'art. La méthode de préparation consiste en général en une étape de mélange, lors de laquelle on prépare un mélange comportant un métal alcalin, une source de silice SiO₂, de l'eau, éventuellement un structurant organique et une étape de cristallisation lors de laquelle on maintient ce mélange dans des conditions permettant la formation d'un solide cristallin. Le métal alcalin préféré est le sodium.
On distinguera les méthodes de synthèses largement décrites dans la littérature ne faisant pas appel à l'utilisation de structurant organique et les méthodes de synthèse utilisant un structurant organique.

De préférence, dans le cadre de l'invention, on utilisera un solide silicique lamellaire synthétisé en présence d'un structurant organique.

Les structurants organiques utilisés pour la synthèse de solides siliciques lamellaires peuvent être choisis parmi la liste suivante non exhaustive comprenant le chlorure de benzyltriethylammonium, le chlorure de benzyltriméthylammonium, le chlorure de dibenzyldiméthylammonium, le N,N'-diméthylpiperazine, la triéthylamine, ou d'autres composés quaternaires ou des amines hétérocycle, une alkylamine, une trialkylamine, un composé tétraalkylammonium et une diamine triméthylhexaméthylenediamine, ledit alkyl ayant de 1 à 12 atomes de carbone.
De manière préférée, le structurant organique comporte au moins un groupement alcool et au moins un groupement amine séparés par une chaîne hydrocarbonée. Avantageusement, le structurant organique comporte un seul groupement alcool et un seul groupement amine.

De manière plus préférée, le groupement alcool est un groupement terminal du structurant organique. De la même façon, le groupement amine est préférentiellement un groupement terminal du structurant organique. De manière encore plus préférée, les deux groupements alcool et amine sont des groupements terminaux du structurant organique.
De préférence, le structurant organique comporte de 1 à 20 atomes de carbone.
La chaîne hydrocarbonée séparant les deux groupements amine et alcool peut comporter un groupement alkyl linéaire, cyclique ou aromatique, de préférence cyclique ou aromatique.
De préférence, le structurant organique est choisi dans le groupe formé par la tyramine, le 4-aminophénol, le trans-4-aminocyclohexanol et le 2-(4-amino-phényl)-éthanol.

Le procédé de synthèse du matériau silicique lamellaire comporte une étape de mélange, lors de laquelle on prépare un mélange comportant un métal alcalin, une source de silice, de l'eau et le structurant organique.

Le métal alcalin A incorporé dans l'étape de préparation du mélange peut être du lithium, du potassium, du sodium ou/et du calcium. De préférence, le métal alcalin est du sodium. La source de silice incorporée dans l'étape de préparation du mélange peut être du silicate, du silica gel, de la silice colloidale et/ou de l'acide silicique.

De préférence, lors de l'étape i) de mélange, on incorpore, en outre, au moins un métal non silicique, dont le métal M.

De manière plus préférée, le métal M est choisi dans le groupe formé par le bore, le chrome, le gallium, l'indium, le nickel, le zirconium, le cobalt, le titane, le cuivre, le niobium, le magnésium, le zinc, le manganèse, le germanium. De manière encore plus préférée, le métal M est choisi parmi le bore, le gallium, l'indium, le nickel, le cobalt, le cuivre, le niobium, le magnésium, le zinc, le manganèse, le germanium.

De l'aluminium peut également être incorporé sous la forme Al₂O₃, Al(NO₃)₃, par exemple.

Le métal M peut être incorporé dans le mélange sous une forme oxydée XOn, ou sous toute autre forme, telle que, par exemple, Co(CH₃COO)₂, Ti(EtO)₄, Ni(CH₃COO)₂, Zn(CH₃COO)₂, Cu(CH₃COO)₂, Cr(CH₃COO)₂, Zr(OH)₄, Na₂B₄O₇, Mg(CH₃COO)₂, Mn(CH₃COO)₂, Nb₂O₅, GeO₂.

La composition du mélange obtenue lors de l'étape i) peut être décrite comme suit : SiO₂ : x M⁺OH⁻ : y H₂O : z A
- x étant généralement compris entre 0,1 et 1, de préférence entre 0,1 et 0,6
- y étant supérieur à 10
- z étant compris entre 0,05 et 3, de préférence entre 0,2 et 1

Le procédé de synthèse du matériau silicique lamellaire comporte une étape de cristallisation lors de laquelle on maintient ce mélange dans des conditions permettant la formation d'un solide cristallin.

L'étape de cristallisation est généralement de type hydrothermale. Cette étape peut être réalisée selon toute méthode connue de l'homme de l'art, de préférence en autoclave. Le mélange réactionnel peut être vigoureusement agité ou pas pendant la durée de l'étape de cristallisation.

Avantageusement, lors de l'étape ii) de cristallisation, on chauffe le mélange obtenu lors de l'étape i) à une température de cristallisation comprise entre 100 et 200°C, de préférence entre 135 et 175°C, pendant une durée de cristallisation comprise entre 1 et 20 jours, de préférence entre 3 et 10 jours.

De préférence, le produit obtenu à l'étape ii) de cristallisation est soumis à au moins une des étapes suivantes :
iii) une étape de séparation du solide du mélange de cristallisation,
iv) une étape de lavage du solide, et
v) à une étape de séchage dudit solide.

Le solide cristallisé est généralement séparé du mélange par toute méthode connue de l'homme de l'art telle que la filtration. Le solide est ensuite lavé à l'eau, de préférence de l'eau dé-ionisée.

L'étape v) de séchage est généralement réalisée à une température comprise entre 50 et 150°C pendant une durée allant de 12 à 30 heures.

Le séchage est réalisé à pression atmosphérique de préférence mais peut être effectué sous pression.

Les solides utilisés pour la méthode de préparation de l'invention sont tels que synthétisés (souvent sous forme alcaline) ou ont subi des traitements de modification. Par traitements de modification, on peut citer l'échange cationique qui permet de mettre le solide sous forme acide. On peut citer également de traitement de délamination du solide ou de pontage. On entend par traitement de délaminage tout traitement permettant de diminuer fortement les forces d'interaction entre les feuillets de manière à rompre la cohésion entre les feuillets, à séparer les feuillets les uns des autres et à disperser les feuillets. Le traitement de délaminage peut être de préférence un traitement mécanique (agitation forte) ou l'utilisation d'ultrasons ou toute autre méthode connue de l'homme du métier rentrant dans la définition précédente. Le pontage consiste à introduire des piliers dans les espaces interlamellaires ; il permet de créer une mésoporosité et d'augmenter la surface spécifique.

Les solides silicates lamellaires utilisés pour l'invention contiennent des métaux dans la charpente, dont au moins un métal M, de préférence choisi parmi le bore, le chrome, le gallium, l'indium, le nickel, le zirconium, le cobalt, le titane, le cuivre, le niobium, le magnésium, le zinc, le manganèse, le germanium et de manière encore plus préférée choisi parmile bore, le gallium, l'indium, le nickel, le cobalt, le cuivre, le niobium, le magnésium, le zinc, le manganèse, le germanium.
Les solides silicates lamellaires peuvent contenir de l'aluminium dans la charpente, en plus du ou des autres métaux M. De préférence les solides silicates lamellaires ne contiennent qu'un seul métal M, et éventuellement de l'aluminium, dans la charpente.

L'introduction de métal dans la charpente du solide lamellaire peut être effectuée de toute manière connue de l'homme de l'art, soit par synthèse directe soit par substitution post-synthèse. De manière préférée, le métal est introduit dans la charpente à la synthèse du solide lamellaire.
La source de métal M utilisée peut être sous une forme oxydée MOn, ou sous toute autre forme, telle que, par exemple, Co(CH₃COO)₂, Ti(EtO)₄, Ni(CH₃COO)₂, Zn(CH₃COO)₂, Cu(CH₃COO)₂, Cr(CH₃COO)₂, Zr(OH)₄, Na₂B₄O₇, Mg(CH₃COO)₂, Mn(CH₃COO)₂, Nb₂O₅, GeO₂.

### Source d'aluminium

La source d'aluminium est de préférence de l'aluminate de sodium, ou un sel d'aluminium, par exemple du chlorure, du nitrate, de l'hydroxyde ou du sulfate, un alkoxyde d'aluminium ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.

### Germes

Il peut être avantageux d'additionner des germes au mélange réactionnel afin de réduire le temps nécessaire à la formation des noyaux et/ou la durée totale de cristallisation. Il peut également être avantageux d'utiliser des germes afin de favoriser la formation du solide cristallisé au détriment d'impuretés. De tels germes comprennent des solides cristallisés, notamment des cristaux du solide cristallisé à synthétiser. Les germes cristallins sont généralement ajoutés dans une proportion comprise entre 0,01 et 10 % du poids de la source de silicium utilisée dans le mélange réactionnel.

### Cation alcalin

Le cation alcalin est choisi dans le groupe formé par le lithium, potassium, sodium, calcium.
Le sodium est préféré.

### Structurant organique

Les zéolithes cristallisent à partir d'un gel contenant éventuellement un structurant organique. Le structurant organique est un composé qui contribue à la formation d'un réseau zéolithique donné durant le procédé de cristallisation et des conditions de synthèse données.

Pour un type structural donné tel que défini dans l'atlas of Zeolites (précédemment cité), il existe plusieurs types de zéolithes associées synthétisées avec des structurants organiques différents. La synthèse d'une zéolithe peut être obtenue en utilisant des structurants différents, de même que l'utilisation d'un structurant organique dans des conditions de synthèse différente mène à une zéolithe différente, de type structural éventuellement différent.
L'utilisation d'un structurant particulier ainsi que les procédés de synthèse des zéolithes sont connue de l'homme du métier. La revue "Verified syntheses of zeolitic materials" , IZA Publication, H.Robson, Ed, donnent des procédés de synthèse de nombreuses zéolithes vérifiés et publiés dans la littérature.

Par exemple, la zéolithe EU-1 et ZSM-50, de type structural EUO, sont synthétisés respectivement avec les structurants organiques hexaméthonium (HM) et dibenzyldiméthylammonium (DBDMA).
La zéolithe Y, et plus généralement les zéolithes de type structural FAU, sont synthétisées en milieu hydrothermal sans la présence de structurant organique et en présence de germes. La zéolithe MOR est également synthétisée sans structurant. La zéolithe Béta peut être synthétisée en utilisant l'hydroxyde de tetraethylammonium. La zéolithe ZSM-5 peut être synthétisée sans structurant mais est synthétisée préférentiellement avec le bromure de tetrapropylammonium (TPA) (synthèse industrielle).
La zéolithe ZSM-22 peut être synthétisée avec un structurant de type diamino-octane.

### Conditions de synthèse

Les conditions de synthèse des zéolithes sont largement connues de l'homme du métier. Le gel est avantageusement mis sous conditions hydrothermales sous une pression de réaction autogène, éventuellement en ajoutant du gaz, par exemple de l'azote, à une température comprise entre 120°C et 200°C. La durée nécessaire pour obtenir la cristallisation varie généralement entre 1 heure et plusieurs mois en fonction de la composition des réactifs dans le gel, de l'agitation et de la température de réaction. La mise en réaction s'effectue généralement sous agitation ou en absence d'agitation, de préférence en présence d'agitation.

A la fin de la réaction, la phase solide obtenue est séparée du mélange par toute méthode connue de l'homme de l'art telle que la filtration. La phase solide est lavé à l'eau, de préférence déionisée. La phase solide est ensuite prête pour des étapes ultérieures telles que le séchage, la déshydratation et la calcination et/ou l'échange d'ions. Pour ces étapes, toutes les méthodes conventionnelles connues de l'homme du métier peuvent être employées.

A la fin de la réaction, le solide est filtré et lavé; il est ensuite dit sous sa forme "brute de synthèse" et est prêt pour des étapes ultérieures telles que le séchage, la déshydratation et la calcination et/ou l'échange d'ions. Pour ces étapes, toutes les méthodes conventionnelles connues de l'homme du métier peuvent être employées.
L'étape de calcination s'effectue avantageusement par une ou plusieurs étapes de chauffage à des températures allant de 100 à 1000°C pour des durées allant de quelques heures à plusieurs jours. De manière préférée, la calcination s'effectue en deux étapes de chauffage consécutives, la première étant réalisée à une température comprise entre 100 et 300°C et la deuxième étant réalisée à une température comprise entre 400°C et 700°C, la température étant maintenue cinq à dix heures à chaque étape.

Les formes calcinées des solides ne contiennent plus de composé organique , ou en quantité moindre que la "forme brute de synthèse", dans la mesure où la substance organique est éliminée en majeure partie, généralement par un traitement thermique consistant à brûler la substance organique en présence d'air.
Parmi les formes de zéolithes obtenues par échange d'ions, la forme ammonium (NH4+) est importante, car elle peut être facilement convertie sous la forme hydrogène par calcination.

Des traitements de modifications peuvent être aussi appliqués au solide ainsi calciné. On entend par traitement de modification tous les traitements tels que les-vapotraitements ou les attaques acide connus de l'homme de l'art.

### Solides obtenus par la méthode

Selon la méthode de préparation de l'invention, toutes zéolithes contenant des métaux autres que l'aluminium dans la charpente peuvent être synthétisées. Par métaux autres que l'aluminium, on peut citer sans être exhaustif les métaux tels que le bore, le chrome, le gallium, l'indium, le nickel, le zirconium, le cobalt, le titane, le cuivre, le niobium, le magnésium, le zinc, le manganèse, le germanium. De manière encore plus préférée, le métal contenu dans la charpente de la zéolithe est choisi parmi le bore, le gallium, l'indium, le nickel, le cobalt, le cuivre, le niobium, le magnésium, le zinc, le manganèse, le germanium.

Selon un mode préféré de l'invention, le solide obtenu est une zéolithe de type FAU, de manière plus préférée une zéolithe Y.

Selon un mode très préféré, le métal M contenu dans la zéolithe Y ainsi obtenue est le titane. Le rapport Si/Ti est généralement compris entre 10 et 1000, de préférence compris entre 15 et 80 ou entre 400 et 700.
Selon un autre mode très préféré, la zéolithe Y ainsi obtenue comprend du nickel. Le rapport Si/Ni est généralement compris entre 10 et 1000, de préférence compris entre 15 et 80 ou entre 400 et 700.

### Nouveaux solides

L'invention concerne également des nouveaux solides métalloaluminosilicates contenant dans la charpente des métaux autres que l'aluminium tels que le bore, le chrome, le gallium, l'indium, le nickel, le zirconium, le cobalt, le titane, le cuivre, le niobium, le magnésium, le zinc, le manganèse, le germanium notamment les zéolithes de :
- structure FAU cristallisant dans le réseau (Si, Al, M); avec M= Co, Ni, Cu, Ti Mn
- structure Bêta cristallisant dans le réseau (Si, Al, M); avec M= Co, Cu, Ni, Mn
- structure MFI cristallisant dans le réseau (Si, Al, M); avec M= Co, Ni, Zr,
   Cu, Mn, de préférence avec M = Co, Ni, Cu, Mn
- structure MOR cristallisant dans le réseau (Si, Al, M); avec M= Co, Ni, Zr, Cu, Mn, de préférence avec M = Co, Ni, Cu, Mn
- structure EUO cristallisant dans le réseau (Si, Al, M); avec M= Co, Ni, Cr , Zr, Ti, Mn
- structure NES cristallisant dans le réseau (Si, Al, M); avec M= Co, Ni, Cr , Zr, Ti, Mn.
- structure TON cristallisant dans le réseau (Si, Al, M); avec M= Co, Ni, Cr , Zr, Ti, Mn.

Une zéolithe préférée est une zéolithe de type FAU, de manière plus préférée une zéolithe Y.
Dans un mode de réalisation, la zéolithe Y obtenue comprend de préférence un métal choisi parmi Co, Ni, Cu, Mn dans la charpente.
Selon un autre mode très préféré, le métal M contenu dans la zéolithe Y ainsi obtenue est le titane seul. Le rapport Si/Ti est généralement compris entre 10 et 1000, de préférence compris entre 15 et 80 ou entre 400 et 700.
Selon encore un autre mode très préféré, la zéolithe Y ainsi obtenue comprend du nickel. Le rapport Si/Ni est généralement compris entre 10 et 1000, de préférence compris entre 15 et 80 ou entre 400 et 700.

### Exemple 1 : Synthèse de métalloaluminosilicate dans le réseau FAU

Le solide est synthétisé à partir d'un gel préparé selon les compositions molaires suivantes:
SiO₂/AlO₂O₃ = 5
Na₂O / SiO₂ = 0.43
H₂O / SiO₂ = 18
Ce gel est mis en contact avec des germes de zéolithe FAU tel que le gel final ait donc la composition suivante :
SiO₂/ Al₂O₃= 10
Na₂O / SiO₂= 0.42
H₂O / SiO₂ = 18
avec
- La source de Na est de la soude NaOH (Scharlau),
- La source d' AI est de l'aluminate de sodium 32.8% Na₂O, 54% Al₂O_{3,} 13.2% H₂O (Carlo Erba),
- H₂O déionisée
- La source de Si est soit de la Magadiite avec du cobalt, du cuivre, du Nickel ou Titane dans la charpente ou bien de la Kenyaite avec du nickel, du titane, du cobalt ou du cuivre dans la charpente.

### Préparation:

Une solution contenant 0.44 g de NaOH, 0.32 g d' Al₂O₃ et 7.82 g d'eau est agitée vigoureusement (vitesse d'agitation = 350 tour/minute). A cette solution, sont ajoutés 2.57 g de Magadiite (avec Co, Cu, Ni ou Ti ) ou de Kenyaite (avec Ni, Ti, Co ou Cu). Le mélange est agité. A ce mélange, les germes de FAU sont ajoutés. Ensuite le mélange est vigoureusement agité 1 heure (vitesse d'agitation = 350 tour/minute) puis transféré dans un flacon en propylène. Le mélange est alors chauffé pendant 24 heures à 100ºC si la source de silicium est la Magadiite et pendant 48 heures à 100ºC si la source de silicium est la Kenyaite.

Le produit obtenu après cristallisation est centrifugé, lavé à l'eau déionisée et séché une nuit à 100°C.

Les rapports Si/Al et Si/M des solides ainsi obtenus sont reportés dans le tableau 1.

**Tableau 1**

| **source de Si, nature du métal, rapport Si/M sur le matériau lamellaire** | **Si/Al sur le solide obtenu** | **Si / Metal sur le solide obtenu** |
|---|---|---|
| Magadiite avec Co Si/Co=50 | 4.4 | 28.5 |
| Magadiite avec Co Si/Co=30 | 4.9 | 30.0 |
| Magadiite avec Ni Si/Ni=50 | 3.9 | 36.4 |
| Magadiite avec Ni Si/Ni=650 | 5.6 | 501.0 |
| Magadiite avec Cu Si/Cu=50 | 4.1 | 114.0 |
| Magadiite avec Ti Si/Ti=100 | 4.0 | 16.0 |
| Magadiite avec Ti Si/Ti=1000 | 4.0 | 520.0 |
| Kenyaite avec Co Si/Co=30 | 4.1 | 20.0 |
| Kenyaite avec Ti Si/Ti=100 | 4.1 | 32.0 |
| Kenyaite avec Cu Si/Cu=30 | 4.2 | 18.0 |
| Kenyaite avec Ni Si/Ni=50 | 4.1 | 41.0 |
| Kenyaite avec Ni Si/Ni=650 | 4.0 | 480.0 |

### Exemple 2: Synthèse de métalloaluminosilicate dans le réseau Bêta

Le solide est synthétisé à partir d'un gel préparé selon les compositions molaires suivantes:
SiO₂ / Al₂O₃ = 50
TEAOH / SiO₂ = 0.5
NaOH / SiO₂ = 0.02
H₂O / SiO₂ = 15
(Na+K) / SiO₂=0.12
K/(Na+K)=0.33
- La source de Si est une Magadiite avec Co ou Mn dans la charpente,
- L'hydroxyde de tetraethylammonium (TEAOH) à 35% de Aldrich est le structurant organique,
- La source de sodium Na est de la soude NaOH (Scharlau) et NaCl 99% (Prolabo)
- La source d' Al est de l'aluminate de sodium 32.8% Na₂O, 54% Al₂O_{3.} 13.2% H₂O (Carlo Erba),
- La source de K est KCl 99.5% (Scharlau).
- L'eau est de l'H₂O déionisée

### Préparation:

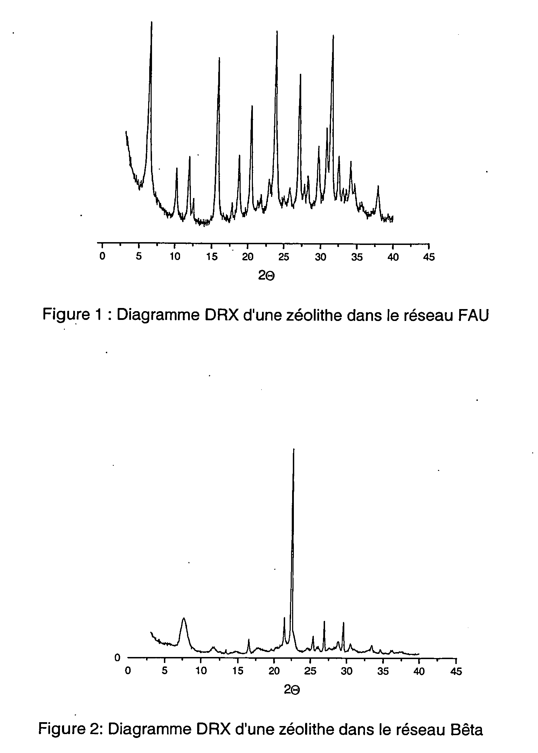

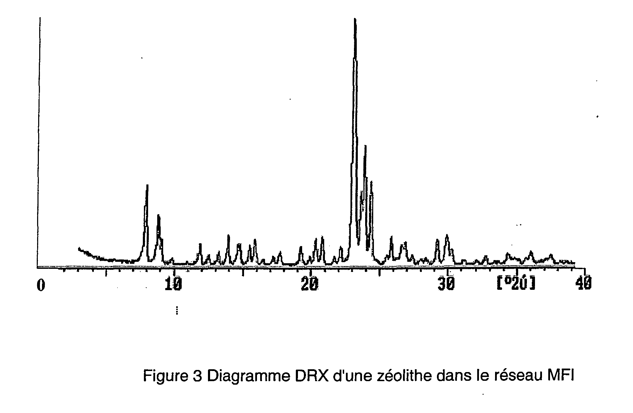

0.088 g de NaCl et 0.214 g de KCl sont dilués dans une solution de 15.4g de d'hydroxyde de tetraethylammonium et 8.58 g d'eau.
4.402 g de Magadiite contenant un métal M (Co, Mn) sont ajoutés sous agitation (vitesse d'agitation = 350 tour/minute). Après 30 minutes, une solution comprenant 0.275 g d'aluminate de sodium, 0.056 g de NaOH et 2.92 g d'eau est ajoutée au mélange. Le mélange est agité pendant 30 minutes.
Le gel obtenu est transféré dans la chemise en téflon d'un autoclave et chauffé à 140º C . L'autoclave est continuellement agité, l'axe longitudinal de l'autoclave tournant avec une vitesse d'environ 60 tours/minute dans un plan perpendiculaire à l'axe de rotation durant 15 jours. Le produit obtenu après cristallisation est centrifugé et le solide récupéré est lavé à l'eau distillée et le solide est séché une nuit à 100°C.
Les solides obtenus selon la préparation de l'invention possèdent un spectre DRX identique à celui reporté figure2, semblable à celui d'une zéolithe Bêta.

Dans le cas du solide contenant le Cobalt, le tableau 2 précise les compositions en Si, Al et Co.

| **source de Si, nature du métal, rapport Si/M sur le matériau lamellaire** | **Si/AI sur le solide obtenu** | **Si / Métal sur le solide obtenu** |
|---|---|---|
| Magadiite avec Co Si/Co=30 | 13.6 | 15.2 |
| Magadiite avec Co Si/Co=40 | 13.6 | 23.4 |
| Magadiite avec Co Si/Co = 50 | 11.3 | 41.2 |
| Magadiite avec Mn Si/Mn = 50 | 10.7 | 52.7 |

### Exemple 3 : Synthèse de métalloaluminosilicate dans le réseau MFI

Le solide est synthétisé à partir d'un gel préparé selon les compositions molaires suivantes:
SiO₂ / Al₂O₃=100 NaOH / SiO₂ = 0.15 H₂O / SiO₂ = 34.5 .....TPA / SiO₂ = 0.31
avec
- La source d' Al₂O₃ est Al₂ (SO₄)₃, 18 H₂O (Merck)
- La source de SiO₂ est la Magadiite avec des métaux dans la charpente (Co, Ni, Cu, Mn)
- Le structurant organique est le bromure de tetrapropylammonium (TPA - Br) 99% (Aldrich)
- La source de Na est de la soude NaOH (Scharlau)
- L'eau est de l'H₂O déionisée.

### Préparation:

15.19 g de Magadiite contenant un métal M (Co, Ni, Cu, Mn), 151.19 g d'eau, 1.68 g d' Al₂(SO₄)₃·18H₂O, 1.519 g de NaOH et 20.112 g de bromure de tetrapropylammonium sont mélangés sous agitation durant une heure. Le gel obtenu est transféré dans une chemise en téflon d'un autoclave et chauffé à 175°C sans rotation pendant 6 jours.

Le produit obtenu après cristallisation est filtré et le solide récupéré est lavé à l'eau distillée et le solide est séché une nuit à 100°C.

**Tableau 3**

| **source de Si, nature du métal, rapport Si/M sur le matériau lamellaire** | **Si/Al sur le solide obtenu** | **Si / Métal sur le solide obtenu** |
|---|---|---|
| Magadiite avec Ni Si/Ni=50 | 28.0 | 41.1 |
| Magadiite avec Co Si/Co=50 | 17.0 | 30 |
| Magadiite avec Mn Si/Mn = 50 | 10 | 124 |
| Magadiite avec Cu Si/Cu = 50 | 41.8 | 80.6 |

## Revendications

1. Méthode de préparation par synthèse directe de métalloaluminosilicate cristallisé utilisant au moins une source d'aluminium et, comme source de silicium et comme source d'au moins un autre métal M choisi dans le groupe formé par le bore, le chrome, le gallium, l'indium, le nickel, le zirconium, le cobalt, le titane, le cuivre, le niobium, le magnésium, le zinc, le manganèse, le germanium, au moins un matériau silicique lamellaire contenant des métaux dans la charpente.

2. Méthode de préparation selon la revendication 1 comprenant une étape de mélange d'au moins un solide lamellaire comme source de silicium et comme source d'un autre métal M, avec au moins une source d'aluminium, et de l'eau, une étape de cristallisation, une étape de nucléation et une étape de croissance des cristaux.

3. Méthode de préparation selon la revendication 2 dans laquelle le mélange comprend au moins un composé organique en tant que structurant organique.

4. Méthode de préparation selon l'une des revendications 2 à 3 dans laquelle le mélange comprend au moins un germe de zéolithe.

5. Méthode de préparation selon l'une des revendications 2 à 4 dans laquelle le mélange comprend au moins une source de cation alcalin.

6. Méthode de préparation selon l'une des revendications précédentes dans laquelle le métal M est choisi dans le groupe formé par le bore, le gallium, l'indium, le nickel, le cobalt, le cuivre, le niobium, le magnésium, le zinc, le manganèse, le germanium.

7. Méthode de préparation selon l'une des revendications précédentes dans laquelle le matériau silicique lamellaire est la Magadiite ou la Kenyaite.

8. Méthode de préparation selon la revendication 7 dans laquelle le matériau silicique lamellaire est la Magadiite.

9. Méthode de préparation selon l'une des revendications précédentes dans laquelle le matériau silicique lamellaire est synthétisé en présence d'un structurant organique.

10. Méthode de préparation selon la revendication 9 dans laquelle le structurant organique comporte au moins un groupement alcool et au moins un groupement amine séparés par une chaîne hydrocarbonée.

11. Méthode de préparation selon la revendication 10 dans laquelle le structurant organique comporte un seul groupement alcool et un seul groupement amine.

12. Méthode de préparation selon la revendication 11 dans laquelle le groupement alcool est un groupement terminal du structurant organique et/ou le groupement amine est un groupement terminal du structurant organique.

13. Méthode de préparation selon l'une des revendications 9 à 12 dans laquelle le structurant organique comporte de 1 à 20 atomes de carbone.

14. Méthode de préparation selon l'une des revendications précédente dans laquelle le matériau silicique lamellaire est échangé cationiquement, ponté ou délaminé.

15. Solide métalloaluminosilicate cristallisé susceptible d'être obtenu par la méthode selon l'une des revendications 1 à 14.

16. Solide métalloaluminosilicate selon la revendication 15 contenant dans la charpente au moins un métal M choisi dans le groupe formé par le bore, le chrome, le gallium, l'indium, le nickel, le zirconium, le cobalt, le titane, le cuivre, le niobium, le magnésium, le zinc, le manganèse, le germanium.

17. Solide métalloaluminosilicate selon la revendication 16 contenant dans la charpente au moins un métal M choisi dans le groupe formé par le bore, le gallium, l'indium, le nickel, le cobalt, le cuivre, le niobium, le magnésium, le zinc, le manganèse, le germanium.

18. Solide métalloaluminosilicate selon la revendication 16 ou 17 dont la structure est de type FAU.

19. Solide métalloaluminosilicate comprenant des métaux dans la charpente zéolithique choisi dans le groupe formé par les zéolithes de structure FAU cristallisant dans le réseau (Si, Al, M) où M désigne un métal choisi parmi Co, Ni, Cu, Ti, Mn.

20. Solide métalloaluminosilicate comprenant des métaux dans la charpente zéolithique choisi dans le groupe formé par les zéolithes de structure bêta cristallisant dans le réseau (Si, Al, M) où M désigne un métal choisi parmi Co, Cu, Ni, Mn.

21. Solide métalloaluminosilicate comprenant des métaux dans la charpente zéolithique choisi dans le groupe formé par les zéolithes de structure MFI ou MOR cristallisant dans le réseau (Si, Al, M) où M désigne un métal choisi parmi Co, Ni, Cu, Zr, Mn.

22. Solide métalloaluminosilicate comprenant des métaux dans la charpente zéolithique choisi dans le groupe formé par les zéolithes de structure EUO, NES ou TON cristallisant dans le réseau (Si, Al, M) où M désigne un métal choisi parmi Co, Ni, Cr, Zr, Ti, Mn.

23. Solide métalloaluminosilicate selon la revendication 18 ou 19 qui est une zéolithe Y.

24. Solide métalloaluminosilicate selon la revendication 23 qui contient du Ni avec un rapport Si/Ni compris entre 10 et 1000.

25. Solide métalloaluminosilicate selon la revendication 23 qui contient comme seul métal M du Ti avec un rapport Si/Ti compris entre 10 et 1000.
